# EUROPÄISCHE PATENTANMELDUNG

(11) **EP 1 363 038 A1**
(43) Veröffentlichungstag der Anmeldung: **19.11.2003**
(21) Anmeldenummer: 02010194.5
(22) Anmeldetag: 15.05.2002
(51) Int. Cl.: F16D 43/202

(54) **Einrichtung zur Übertragung von Drehbewegungen eines ersten und eines zweiten Antriebs auf eine gemeinsame Welle**

(71) Anmelder: Honeywell International, Inc., Morristown, New Jersey 07962-1057 (US)
(72) Erfinder: König, Bernhard, 86399 Bobingen (DE)
(74) Vertreter: Torggler, Paul Norbert, Dr.

(57) **Zusammenfassung**

Einrichtung zur Übertragung von Drehbewegungen eines ersten (1) und eines zweiten (2) Antriebs auf eine gemeinsame Welle (4), wobei die Einrichtung einen Schaltteil (3) mit zwei Verzahnungen zur Übertragung der Drehbewegung des ersten und des zweiten Antriebs (1, 2) auf die Welle (4) aufweist, wobei der Schaltteil (3) zwischen einer ersten Position, bei der er mit beiden Antrieben (1, 2) in kraftschlüssiger Verbindung steht und einer zweiten und einer dritten Position, bei der er jeweils nur mit einem Antrieb (1, 2) in kraftschlüssiger Verbindung steht, verstellbar vorzugsweise verschiebbar ist.

## Beschreibung

Die vorliegende Erfindung betrifft eine Einrichtung zur Übertragung von Drehbewegungen eines ersten und eines zweiten Antriebs auf eine gemeinsame Welle.

Beim Stand der Technik ist es bereits z.B. aus der EP 0 913 600 A1 bekannt, eine Welle über mehrere Antriebe in eine Drehbewegung zu versetzen. Die Verwendung von mehreren voneinander unabhängig angetriebenen Antrieben dient hierbei im wesentlichen dazu, eine Redundanz des Gesamtantriebs zu schaffen, damit beim Ausfall eines Antriebs die Welle weiterhin durch die anderen verbleibenden Antriebe gedreht werden kann. Solche sogenannten redundanten Antriebe finden vor allem in Bereichen mit erhöhten Sicherheitsanforderungen wie z.B. beim Flugzeugbau oder dergleichen ihre Anwendung. Der Nachteil der bisher bekannten gattungsgemäßen redundanten Antriebe liegt darin, daß sie in der Regel einen relativ großen Platzbedarf aufweisen und über verhältnismäßig viele bewegliche Teile verfügen.

Aufgabe der vorliegenden Erfindung ist es somit, eine weiter verbesserte redundante Einrichtung zur Übertragung von Drehbewegungen auf eine gemeinsame Welle zu schaffen, bei der die oben genannten Nachteile beseitigt sind.

Dies wird erfindungsgemäß dadurch erreicht, daß die Einrichtung einen Schaltteil mit zwei Verzahnungen zur Übertragung der Drehbewegung des ersten und des zweiten Antriebs auf die Welle aufweist, wobei der Schaltteil zwischen einer ersten Position, bei der er mit beiden Antrieben in kraftschlüssiger Verbindung steht und einer zweiten und einer dritten Position, bei der er jeweils nur mit einem Antrieb in kraftschlüssiger Verbindung steht, verstellbar vorzugsweise verschiebbar ist.

Der erfindungsgemäße Antrieb sieht somit drei verschiedene Betriebszustände vor. In einem ersten Betriebszustand ist ein verstellbarer Schaltteil in einer ersten Position angeordnet, bei der er über jeweils eine geeignete Verzahnung mit beiden Antrieben in kraftschlüssiger Verbindung steht und von beiden Antrieben in eine Drehbewegung versetzt wird. Unter dem Begriff Verzahnung ist hierbei nicht nur eine formschlüssige Verzahnung von Zahnrädern im eigentlichen Sinn sondern jede Art von kraftschlüssiger Verbindung denkbar. So sollen z.B. auch im wesentlichen auf Reibung basierende Kraftübertragungsmechanismen mittels Mikroverzahnungen vom Begriff der Verzahnung umfaßt sein. Fällt einer der beiden Antriebe aus und bleibt stehen, so ist die Drehbewegung der Welle weiterhin gewährleistet, da der Schaltteil der erfindungsgemäßen Einrichtung in eine zweite oder in eine dritte Position verstellbar ist, mit der er nur noch mit dem sich weiterhin bewegenden Antrieb in kraftschlüssiger Verbindung steht. Hierdurch wird ein besonders kompakt bauender, aber auch zuverlässiger redundanter Antrieb geschaffen, da die Drehung der gemeinsamen Welle auch dann gewährleistet ist, wenn einer der beiden Antriebe ausfällt.

Eine besonders günstige Ausführungsform der kraftschlüssigen Übertragung der Drehbewegung zwischen dem Schaltteil und den Antrieben sieht vor, daß der erste und der zweite Antrieb als, vorzugsweise von außen angetriebene, Zahnräder ausgebildet sind. Diese Ausführungsvariante ist besonders dann zu bevorzugen, wenn größere Drehmomente auf eine gemeinsame Welle übertragen werden sollen.

Besonders kleinbauend kann die erfindungsgemäße Einrichtung ausgeführt werden, wenn der erste und der zweite Antrieb sowie auch das Schaltteil koaxial zur Welle und die Welle umfassend angeordnet sind. Hierbei ist es wiederum günstig, daß der Schaltteil in axialer Richtung der Welle verschiebbar ist. Bei dieser Variante wird der Schaltteil zwischen der ersten, zweiten und dritten Position in axialer Richtung der Welle verschoben.

In einer günstigen Ausführungsform ist wiederum vorgesehen, daß in der ersten Position des Schaltteiles die Kraftübertragung vom ersten Antrieb auf das Schaltteil über zur axialen Richtung der Welle parallele Verzahnungsflächen erfolgt und die Kraftübertragung vom zweiten Antrieb auf das Schaltteil über zur axialen Richtung der Welle schräge oder abgerundete Verzahnungsflächen erfolgt. Hierdurch wird eine ungleiche Aufteilung der vom ersten und vom zweiten Antrieb auf die Welle übertragenen Drehmomente erreicht. Über entsprechend abgerundete oder schräge Ausbildung der Verzahnungsflächen zwischen dem Schaltteil und dem zweiten Antrieb kann dies z.B. in der Art ausgeführt sein, daß über den ersten Antrieb ca. 70 % des Gesamtdrehmoments und über den zweiten Antrieb ca. 30 % des Gesamtdrehmoments auf den Schaltteil und damit auf die Welle übertragen werden. Wird einer der beiden Antriebe nun blockiert, so rutscht der zweite Antrieb aufgrund der abgerundeten oder schrägen Verzahnungsflächen aus der kraftschlüssigen Verbindung mit dem Schaltteil. Dies ist wiederum durch die vorzugsweise axiale Verstellbarkeit des Schaltteils ermöglicht. Hierbei ist es besonders günstig, daß der Schaltteil gegenüber dem ersten Antrieb auf Druck federbelastet ist.

Ist aufgrund des Blockierens eines der beiden Antriebe der Schaltteil nicht mehr mit beiden Antrieben im Eingriff und somit in der zweiten oder der dritten Position angeordnet, so ist vorgesehen, daß der Schaltteil über zur axialen Richtung der Welle parallele Verzahnungsflächen mit jeweils nur einem Antrieb in kraftschlüssiger Verbindung steht. In dieser Betriebsart wird durch die zur Welle parallen Verzahnungsflächen eine maximal mögliche Drehmomentübertragung vom noch aktiv arbeitenden Antrieb auf das Schaltteil und damit auf die Welle gewährleistet.

Weitere Merkmale und Einzelheiten der vorliegenden Erfindung ergeben sich aus der nachfolgenden Figurenbeschreibung. Dabei zeigt:
- Fig. 1 bis 3: jeweils eine schematisierte Darstellung zur Funktionsweise einer erfindungsgemäßen Ausführungsform mit einem Schaltteil in einer ersten (Fig. 1), einer zweiten (Fig. 2) und in einer dritten (Fig. 3) Position,
- Fig. 4: eine konkrete Ausführungsvariante in Schnittdarstellung,
- Fig. 5: einen Schnitt durch die in Fig. 4 gezeigte Ausführungsvariante entlang der Geraden C-C und
- Fig. 6: eine Schnittdarstellung durch die in Fig. 4 gezeigte Ausführungsvariante entlang der Geraden B-B.

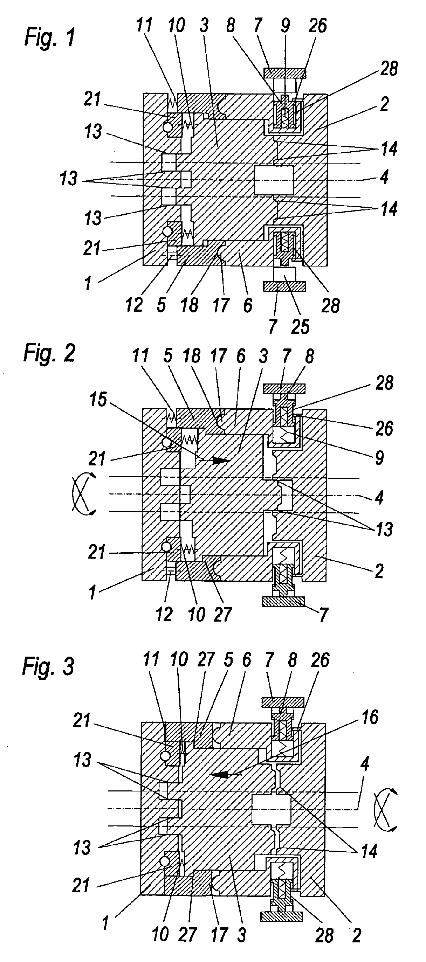

In Fig. 1 ist eine erfindungsgemäße Ausführungsform in einer schematischen Darstellung dargestellt, wobei sich das Schaltteil 3 in der ersten Position befindet, in der es mit dem ersten Antrieb 1 und mit dem zweiten Antrieb 2 gleichzeitig in kraftschlüssigem Eingriff steht. Sowohl der erste Antrieb 1 als auch der zweite Antrieb 2 werden von hier nicht weiter dargestellten Mitteln in eine Drehbewegung versetzt, die sie über die jeweiligen Verzahnungen auf den Schaltteil 3 übertragen. Dieser ist mit der Welle 4 in der Weise drehfest verbunden, daß er in axialer Richtung auf der Welle 4 verschiebbar gelagert ist. Dies kann z.B. mit einer Schiebeverzahnung realisiert sein.

Bei der in Fig. 1 dargestellten ersten Position wird vom ersten Antrieb 1 der größere Teil (z.B. ca. 70 %) des Gesamtdrehmomentes über die zur Welle parallelen Verzahnungsflächen 13 übertragen, während der zweite Antrieb 2 den geringeren Teil des Drehmomentes (z.B. 30 %) auf den Schaltteil und damit auf die Welle 4 überträgt. Die Synchronisation der Drehbewegungen der Antriebe 1 und 2 erfolgt über beim Stand der Technik bekannte - hier nicht dargestellte - Steuerungen oder dergleichen.

Zusätzlich zu den bereits genannten Bauteilen weist die gezeigte erfindungsgemäße Ausführungsvariante noch einen ersten Steuerteil 5 sowie einen zweiten Steuerteil 6 auf. Der erste Steuerteil 5 ist über einen Bolzen 12 mit dem ersten Antrieb 1 drehfest verbunden. Entlang des Bolzens 12 kann der erste Steuerteil 5 eine Bewegung in axialer Richtung der Welle 4 relativ zum ersten Antrieb 1 ausführen, wobei eine komprimierbare Feder 11 zwischen diesen beiden Bauteilen angeordnet ist. Die Feder 11 drückt den ersten Steuerteil 5 in Richtung des zweiten Antriebs 2. Der zweite Steuerteil 6 greift über Stahlkugeln 17 in entsprechende Ausnehmungen 18 des ersten Steuerteils 5 ein. Des weiteren weißt der zweite Steuerteil 6 in entsprechenden Ausnehmungen gelagerte Stifte 8 auf, wobei diese wiederum über komprimierbare Stiftfedern 9 in der Weise federbelastet sind, daß die Stifte 8 in Richtung der Ausnehmungen 25 des Stators 7 gedrückt werden. In der in Fig. 1 gezeigten ersten Position des Schaltteils 3 werden die Stifte 8 durch entsprechende am zweiten Antrieb 2 angeordnete Rückhaltelaschen 26 in der dargestellten Position zurückgehalten, sodaß sie nicht in die Ausnehmungen 25 des Stators 7 eingreifen. In der in Fig. 1 gezeigten ersten Position des Schaltteils 3 führen alle dargestellten Bauteile außer der Stator 7 eine gemeinsame Drehbewegung mit der Welle 4 aus. Stator 7 ist immer ortsfest.

In Fig. 2 ist die zweite Position des Schaltteils 3 dargestellt, welche erreicht wird, nachdem der erste Antrieb 1 ausgefallen ist. Bleibt der erste Antrieb 1 stehen, während sich der zweite Antrieb 2 weiterdreht, so wird zunächst der Schaltteil 3 aus den schrägen Verzahnungen 14 des zweiten Antriebs 2 gehoben. Hierbei führt er kurzzeitig eine axiale Bewegung in Richtung des ersten Antriebs 1 aus. Anschließend wird der Schaltteil 3 mittels der Federn 10 in Richtung 15 des zweiten Antriebs 2 geschoben, wodurch der Schaltteil 3 in der in Fig. 2 dargestellten Weise über die zur Welle parallelen Verzahnungsflächen 13 mit dem zweiten Antrieb 2 in kraftschlüssigen Eingriff kommt. Hierdurch wird die Drehbewegung des zweiten Antriebs 2 weiterhin über den Schaltteil 3 auf die Welle 4 übertragen, während der erste Antrieb 1 sowie der damit drehfest verbundene erste Steuerteil 5 feststehen und die Drehung des Schaltteils 3 und der Welle 4 nicht weiter behindern.

Über den gemeinsam mit dem ersten Antrieb 1 stehenbleibenden Steuerteil 5, die Stahlkugeln 17 und die Ausnehmungen 18 wird auch der zweite Steuerteil 6 in der Weise gebremst, daß die Rückhaltelaschen 26 gegen die Stifte 8 verschoben werden. Durch das hierdurch verursachte Ausrasten der Stifte 8 werden diese durch die Stiftfedern 9 radial nach außen in die Ausnehmungen 25 des Stators 7 gedrückt. Dies führt zum Arretieren des zweiten Steuerteils 6, wodurch dieser, wie der erste Antrieb 1 und der erste Steuerteil 5 ebenfalls feststeht. Der zweite Antrieb 2 und der Schaltteil 3 hingegen führen eine gemeinsame Drehbewegung aus. Aufgrund der in den Stiften 8 vorgesehenen Ausnehmungen 28 kommt es in deren ausgefahrener Position in der sie in den Stator 7 eingreifen nicht zur Kollisionen zwischen den Rückhaltelaschen 26 und den Stiften 8.

In Fig. 3 ist die Situation dargestellt, in der der zweite Antrieb 2 blockiert und nicht mehr drehbar ist. Tritt diese Situation ein, so verdreht sich der zweite Steuerteil 6 gegen den blockierten zweiten Antrieb 2, wodurch die Rückhaltelaschen 26 nicht mehr die Stifte 8 in eingezogener Position halten. Mittels der Stiftfedern 9 werden die Stifte 8 in die Ausnehmungen 25 des Stators 7 eingeführt. Hierdurch wird der zweite Steuerteil 6 am ortsfesten Stator 7 gehalten und ist damit ebenfalls blockiert und nicht mehr drehbar. Tritt die Situation ein, so fahren die Stahlkugeln 17 aus den Ausnehmungen 18 im ersten Steuerteil 5. Hierdurch wird der erste Steuerteil 5 gegen die Kraft der Feder 11 in Richtung 16 des ersten Steuerteils 1 gedrückt. Über entsprechende Kontaktflächen 27 nimmt der erste Steuerteil 5 den Schaltteil 3 mit in Richtung 16 des ersten Antriebs 1. Diese Bewegung des Schaltteils 3 bewirkt wiederum, daß der Schaltteil 3 nicht mehr mit der Verzahnung des zweiten Antriebs 2 in Eingriff ist. Die Ausnehmungen 18 sind in der Weise im ersten Steuerteil 5 angeordnet, daß der Schaltteil 3 immer dann in Richtung 16 geschoben wird, wenn seine Verzahnung über die Gegenverzahnung des blockierten zweiten Antriebs 2 gehoben werden muß. In dieser in Fig. 3 dargestellten dritten Position wird der Schaltteil somit nur vom ersten Antrieb 1 im Zusammenspiel mit dem ersten Steuerteil 5 gedreht, wobei der Schaltteil 3 eine durch die Stahlkugeln 17 hervorgerufene Schwingung in axialer Richtung ausführt. Diese axiale Schwingung ist durch entsprechende Anordnung der Ausnehmungen 18 so getaktet, daß der Schaltteil 3 während seiner Drehbewegung jeweils rechtzeitig über die Verzahnung des blockierten zweiten Antriebs 2 gehoben wird, sodaß der zweite Antrieb 2 nicht die Drehung des Schaltteiles 3 und der Welle 4 behindert.

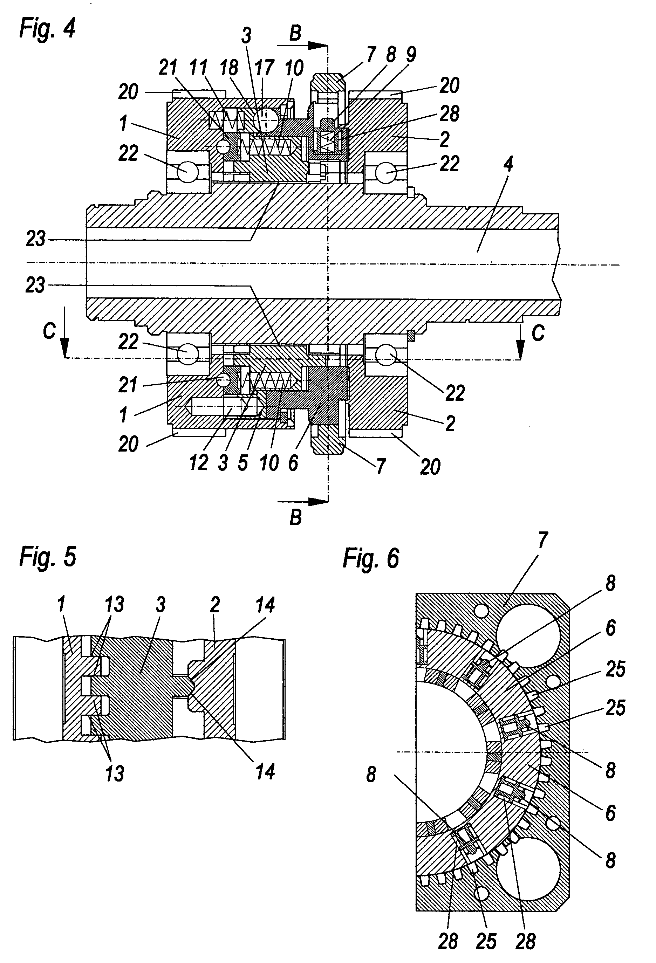

In Fig. 4 ist ein Schnitt in axialer Richtung durch eine konkrete erfindungsgemäße Ausführungsform gezeigt. Sowohl der erste Antrieb 1 als auch der zweite Antrieb 2 sind als die Welle umfassende Zahnräder ausgebildet. Die Drehung beider Antriebe 1 und 2 erfolgt über die jeweils außen am Zahnrad angeordnete Außenverzahnung 20 mittels hier nicht weiter dargestellten geeigneten Antriebspfaden, Motoren oder dergleichen. Die Antriebe 1 und 2 sind über entsprechende Kugellager 22 auf der Welle 4 angeordnet. Zwischen ihnen befinden sich in der schematisch in den Figuren 1 bis 3 dargestellten Weise der erste Steuerteil 5, der zweite Steuerteil 6 sowie der Schaltteil 3. Der Schaltteil 3 ist über die Schiebeverzahnung 23 mit der Welle 4 verbunden und auf dieser in axialer Richtung verschiebbar. Die zwischen dem Schaltteil 3 und dem ersten Antrieb 1 angeordneten Federn 10 sind auf mindestens einem Gleitlager 21 gelagert, um nicht einer Relativbewegung zwischen Schaltteil 3 und erstem Antrieb 1 entgegenzuwirken.

Fig. 5 zeigt in einem Schnitt entlang der in Fig. 4 gezeigten Gerade C-C in einem Ausschnitt wie der Schaltteil 3 in seiner ersten Position sowohl in die Verzahnung des ersten Antriebs 1 als auch in die Verzahnung des zweiten Antriebs 2 eingreift. In dem in Fig. 5 dargestellten Beispiel erfolgt der Eingriff zwischen ersten Antrieb 1 und Schaltteil 3 über zur Welle parallele Verzahnungsflächen 13. Der Eingriff zwischen dem Schaltteil 3 und dem zweiten Antrieb 2 erfolgt über schräge Verzahnungsflächen 14. Hierdurch wird wiederum eine ungleichmäßige Aufteilung der vom ersten Antrieb 1 und der vom zweiten Antrieb 2 übertragenen Drehmomente erreicht.

Fig. 6 zeigt einen Schnitt durch das in Fig. 4 gezeigte Ausführungsbeispiel entlang der Geraden B-B, wobei zu sehen ist, wie die Stifte 8 im zweiten Steuerteil 6 angeordnet sind. Um den zweiten Steuerteil 6 herum ist der nicht drehbare Stator 7 angeordnet. Dieser weist Ausnehmungen 25 auf, in die die Stifte 8 eingreifen, sobald sie nicht anderweitig zurückgehalten sind.

## Patentansprüche

1. Einrichtung zur Übertragung von Drehbewegungen eines ersten und eines zweiten Antriebs auf eine gemeinsame Welle, **dadurch gekennzeichnet, daß** die Einrichtung einen Schaltteil (3) mit zwei Verzahnungen zur Übertragung der Drehbewegung des ersten und des zweiten Antriebs (1, 2) auf die Welle (4) aufweist, wobei der Schaltteil (3) zwischen einer ersten Position, bei der er mit beiden Antrieben (1, 2) in kraftschlüssiger Verbindung steht und einer zweiten und einer dritten Position, bei der er jeweils nur mit einem Antrieb (1, 2) in kraftschlüssiger Verbindung steht, verstellbar vorzugsweise verschiebbar ist.

2. Einrichtung nach Anspruch 1, **dadurch gekennzeichnet, daß** der erste und der zweite Antrieb (1, 2) als, vorzugsweise von außen angetriebene, Zahnräder ausgebildet sind.

3. Einrichtung nach einem der Ansprüche 1 und 2, **dadurch gekennzeichnet, daß** der erste und der zweite Antrieb (1, 2) sowie auch das Schaltteil (3) koaxial zur Welle (4) und die Welle (4) umfassend angeordnet sind.

4. Einrichtung nach einem der Ansprüche 1 bis 3, **dadurch gekennzeichnet, daß** der Schaltteil (3) in axialer Richtung der Welle (4) verschiebbar ist.

5. Einrichtung nach einem der Ansprüche 1 bis 4, **dadurch gekennzeichnet, daß** in der ersten Position des Schaltteiles (3) die Kraftübertragung vom ersten Antrieb (1) auf das Schaltteil (3) über zur axialen Richtung der Welle (4) parallele Verzahnungsflächen (13) erfolgt und die Kraftübertragung vom zweiten Antrieb (2) auf das Schaltteil (3) über zur axialen Richtung der Welle schräge oder abgerundete Verzahnungsflächen (14) erfolgt.

6. Einrichtung nach einem der Ansprüche 1 bis 5, **dadurch gekennzeichnet, daß** der Schaltteil (3) in der zweiten und der dritten Position über zur axialen Richtung der Welle (4) parallele Verzahnungsflächen (13) mit jeweils nur einem Antrieb (1, 2) in kraftschlüssiger Verbindung steht.

7. Einrichtung nach einem der Ansprüche 1 bis 6, **dadurch gekennzeichnet, daß** der Schaltteil (3) gegenüber dem ersten Antrieb (1) auf Druck federbelastet ist.
